# EUROPÄISCHE PATENTANMELDUNG

(11) **EP 0 692 455 A2**
(43) Veröffentlichungstag der Anmeldung: **17.01.1996**
(21) Anmeldenummer: 95110544.4
(22) Anmeldetag: 06.07.1995
(51) Int. Cl.: C01B 39/08, C01B 39/12, C01B 39/48, B01J 29/04, B01J 20/10, C09C 1/28, C09C 1/40, C09C 1/36

(54) **Kristalline Silikatfestkörper**

(30) Priorität: 14.07.1994 DE 4424816
(71) Anmelder: BASF AKTIENGESELLSCHAFT, D-67056 Ludwigshafen (DE)
(72) Erfinder: Gies, Hermann, Prof.Dr., D-45549 Sprockhövel (DE); Roehrig, Carsten, D-44801 Bochum (DE); Marler, Bernd, Dr., D-42799 Leichlingen (DE); Müller, Ulrich, Dr., D-67434 Neustadt (DE)

(57) **Zusammenfassung**

Kristalline Festkörper von Zinko-, Boro-, Alumo-, Gallo-, Titano-, Vanadosilikaten oder deren Gemische mit RUB-17 Struktur, die innerhalb einer monoklinen Raumgruppe von C2, Cm oder C2/m vorliegen und ein Röntgenbeugungsmuster aufweisen, in dem mindestens die folgenden Reflexe (hkl) bei den angegebenen Beugungswinkeln auftreten:

| h | k | l | Intensität I/Iₒ | Beugungswinkel 2 Theta |
|---|---|---|---|---|
| 0 | 4 | 0 | schwach | 8.71 |
| 1 | 3 | 0 | stark | 13.87 |
| 0 | 4 | 1 | schwach | 14.93 |
| 1 | 1 | -1 | mittel | 17.09 |
| 0 | 8 | 0 | mittel | 17.47 |
| 1 | 1 | -2 | stark | 27.06 |
| 1 | 11 | 0 | stark | 27.12 |
| 2 | 2 | -1 | stark | 27.49 |
| 0 | 6 | 2 | stark | 27.74 |
| 2 | 6 | 0 | sehr stark | 27.95 |

sowie deren Verwendungen.

## Beschreibung

Die vorliegende Erfindung betrifft kristalline Festkörper von Zinko-, Boro-, Alumo-, Gallo-, Titano-, Vanadosilikaten oder deren Gemische mit RUB-17 Struktur, die innerhalb einer monoklinen Raumgruppe von C2, Cm oder C2/m vorliegen und ein charakteristisches Röntgenbeugungsmuster aufweisen.

Aus J. Chem. Soc., Chem. Commun. (1991), 1175 ist ein kristallines Zinkosilikat mit der Bezeichnung VPI-7 bekannt, das hydrothermal hergestellt ist. Dieses Material sollte im kristallinen mikroporösen Silikatgitter Zink isomorph für Silicium ersetzt enthalten.

Die Synthese des VPI-7 erfolgt hydrothermal unter Verwendung geeigneter Quellen von Natrium, Silicium und Zink und unter Verwendung von Tetraalkylammoniumhydroxid.

Der vorstehende kristalline Zinkosilikat mit der Bezeichnung VPI-7 hat die Nachteile, daß er beim Trockenen von 200 bis 300°C bereits kollabiert und war daher verbesserungsbedürftig.

Der vorliegenden Erfindung lag daher die Aufgabe zugrunde, den zuvor genannten Nachteilen abzuhelfen.

Demgemäß wurden neue und verbesserte kristalline Festkörper von Zinko-, Boro-, Alumo-, Gallo-, Titano-, Vanadosilikaten oder deren Gemische mit RUB-17 Struktur gefunden, welche dadurch gekennzeichnet sind, daß sie innerhalb einer monoklinen Raumgruppe von C2, Cm oder C2/m vorliegen und ein Röntgenbeugungsmuster aufweisen, in dem mindestens die folgenden Reflexe (hkl) bei den angegebenen Beugungswinkeln auftreten:

| h | k | l | Intensität I/Iₒ | Beugungswinkel 2 Theta |
|---|---|---|---|---|
| 0 | 4 | 0 | schwach | 8.71 |
| 1 | 3 | 0 | stark | 13.87 |
| 0 | 4 | 1 | schwach | 14.93 |
| 1 | 1 | -1 | mittel | 17.09 |
| 0 | 8 | 0 | mittel | 17.47 |
| 1 | 1 | -2 | stark | 27.06 |
| 1 | 11 | 0 | stark | 27.12 |
| 2 | 2 | -1 | stark | 27.49 |
| 0 | 6 | 2 | stark | 27.74 |
| 2 | 6 | 0 | sehr stark | 27.95 |

sowie deren Verwendung.

Die neue kristallinen Festkörper von Zinko-, Boro-, Alumo-, Gallo-, Titano-, Vanadosilikaten oder deren Gemische mit RUB-17 Struktur lassen sich wie folgt herstellen:
Die neuartigen kristallinen Festkörper von Zinko-, Boro-, Alumo-, Gallo-, Titano- und Vanadosilikate, insbesondere das Zinkosilikat - nachfolgend als RUB-17 bezeichnet - entstehen, wenn man dem Syntheseansatz noch Kalium, bevorzugt als Kaliumhydroxid im Molverhältnis von K zu Si von 0,45:1 bis 0,15:1, bevorzugt 0,4:1 bis 0,18:1, besonders bevorzugt 0,25:1 bis 0,20:1 zufügt. Das molare Verhältnis von Si/(Si+A), insbesondere von Si/(Si+Zn) beträgt in der Regel 0,2:1 bis 2:1, bevorzugt 0,5:1 bis 1:1. Dabei ist es vorteilhaft, im Synthesegel vor dem Beginn der Kristallisation folgende molaren Verhältnisse einzustellen:
SiO₂/AOₙ: 30:1 bis 50:1, bevorzugt 40:1 bis 45:1
H₂O/SiO₂: 25:1 bis 150:1, bevorzugt 30:1 bis 40:1
OH⁻/SiO₂: 0,5:1 bis 0,75:1, bevorzugt 0,6:1 bis 0,7:1
Tetraalkylammoniumverbindung/SiO₂: 0,04:1 bis 0,07:1, bevorzugt 0,06:1.

A bedeutet Zink, Bor, Aluminium, Gallium, Titan und Vanadium, bevorzugt Zink, Bor und Aluminium, besonders bevorzugt Zink und n die Wertigkeit von A.

Als Tetraalkylammoniumverbindung eignen sich solche der Formel 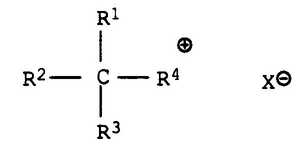
in der R¹, R², R³ und R⁴ unabhängig voneinander, bevorzugt alle gleich sind und C₁- bis C₈-Alkyl, bevorzugt C₁- bis C₄-Alkyl wie Methyl, Ethyl, n-Propyl, iso-Propyl, n-Butyl, iso-Butyl, sec.-Butyl und tert.-Butyl, besonders bevorzugt Methyl und Ethyl und X Hydroxy, Fluor, Chlor oder Brom, bevorzugt Hydroxy, Chlor oder Brom, besonders bevorzugt Hydroxy bedeuten. die Verbindung Tetraethylammoniumhydroxid ist besonders bevorzugt.

Die Kristallisation erfolgt bei Temperaturen von 180 bis 280°C, vorzugsweise 200 bis 250°C, insbesondere 210 bis 230°C in der Regel innerhalb eines Zeitraumes von 5 bis 20 Tagen, wobei bereits nach ca. 14 Tagen gut kristallines Produkt erhalten werden kann.

Nach der Kristallisation kann die erfindungsgemäße Phase nach an sich bekannten Methoden abfiltriert, gewaschen und in der Regel bei 100 bis 120°C getrocknet werden.

Ein solcherart erfindungsgemäßes Zinkosilikat ergibt das in Tabelle 1 angegebene Röntgendiffraktogramm mit einer Zuordnung zu einer monoklinen Raumgruppensymmetrie und den Abmessungen der Elementarzelle von a = 7,328°, b = 40,56°, c = 7,308° und dem Raumwinkel beta = 91,8°.

Zur Entfernung des in den Poren noch vorliegenden Tetraalkylammoniums kann das erfindungsgemäße Material noch einer thermischen Behandlung an Luft oder unter Stickstoff unterzogen werden. Dabei ist es vorteilhaft, das Abbrennen des Templates unter Bedingungen vorzunehmen, die den Temperaturanstieg auf Werte unter 450°C zu begrenzen.

Zur Modifizierung der erfindungsgemäßen Zinko-, Boro-, Alumo-, Gallo-, Titano- und Vanadosilikate, insbesondere des Zinkosilikates können die nach dem derzeitigen Stand der Technik bekannten Methoden der Verformung, des Ionenaustausches und/oder der Imprägnierung mit Metall-, Edelmetall- oder Alkali- und Erdalkalimetalle, der Oberflächenmodifizierung, beispielsweise über CVD, oder Derivatisierungen aktiver Zentren verwendet werden.

Als Anwendungen der neuartigen Zinko-, Boro-, Alumo-, Gallo-, Titano-, Vanadosilikaten oder deren Gemische mit RUB-17 Struktur in der Katalyse sind solche Reaktionen vorteilhaft, die sowohl die katalytischen Eigenschaften der Elemente Zink, Bor, Aluminium, Gallium, Titan und Vanadium, insbesondere des Zinks verlangen, als auch vorteilhaft unter Ausnutzung der Formselektivität im Porengefüge des RUB-17 ablaufen können. Insbesondere sind Aromaten-Aufbaureaktionen denkbar, wie sie von der Reaktion her z.B. in Chem. Abstr. Vol. 108, 170631x, EP-A-434 052 oder US-A-4 935 573 genannt sind. Weiterhin Reaktionen zur hydrierenden Umsetzung von Kohlendioxid zu Kohlenwasserstoff nach Chem. Abstr. Vol. 118, 150806m. Dabei hat das erfindungsgemäße Material den Vorteil, daß Zink bereits unmittelbar bei der Synthese in das Silikatgitter eingebaut und fixiert wird und nicht nachträglich in aufwendigen Verfahrensschritten aufgebracht werden muß.

Als zu katalysierende Reaktionen kommen weiterhin beispielsweise Aufbaureaktionen von Methanol aus Synthesegas oder Konvertierungsreaktionen in Betracht.

Ebenso kann das erfindungsgemäße Material Verwendung finden für Hydrierungen, Dehydrierungen, Oxidehydrierungen, Polymerisationsreaktionen, Aminierungen, Hydratisierungen und Dehydratisierungen, nukleophile und elektrophile Substitutionsreaktionen, Additions- und Eliminationsreaktionen, Doppelbindungs- und Skelettisomerisierungen, Dehydrocyclisierungen, Hydroxylierungen von Heteroaromaten, Epoxid-Aldehydumlagerungen, sowie Kondensationsreaktionen vom Typ der Aldolkondensationen.

Ebenso dient das erfindungsgemäße Material, gegebenenfalls noch modifiziert mit Cu oder Metallen der Pt-Gruppe als Katalysator oder Träger zur katalytischen Abgasbehandlung in DeNOₓ- oder DeSOₓ-Verfahren.

Abhängig vom umzusetzenden Molekül können die katalytischen Reaktionen vorteilhaft in Gas- oder Flüssigphase, oder aber auch in überkritischer Phase durchgeführt werden.

Bei der Anwendung als Sorptionsmittel kann man vorteilhafterweise die hohe innere Oberfläche des erfindungsgemäßen Materials ausnutzen, aber auch Moleküle aufgrund ihres Unterschiedes in der Molekülgröße voneinander trennen. Dabei werden insbesondere kleine Moleküle mit kinetischen Durchmessern von 4 bis 5Å bevorzugt adsorbiert. Insbesondere läßt sich z.B. die Affinität des Zinks ausnutzen, um in Kombination mit der hohen Oberfläche Schwefelverunreinigungen adsorptiv zu entfernen.

Je nach Molekül kann die Adsorption in Gas- oder Flüssigphase erfolgen. Desaktivierte Katalysatoren oder Adsorbentien des erfindungsgemäßen Zinkosilikats können durch kontrolliertes Abbrennen von Kohlenstoffbelegungen im Temperaturbereich von 200 bis 450°C wieder in eine aktive Form zurückgeführt werden.

Eine weitere Anwendung ergibt sich aus der Verwendung als heterogen nicht-löslicher bakterizid bzw. auch zusätzlich pigmentierend wirkender Zusatz im Kosmetik-, Haushalts- und Sanitärbereich, sowie für Verpackungsmaterialien.

### Beispiele

### Beispiel

In einem PP-Becher stellt man unter Rühren bei Raumtemperatur aus 3.12 g NaOH, 2.19 g KOH, 3.75 ml Tetraethylammoniumhydroxid (40%-ige Lösung in Wasser) und 100 ml deionisiertem Wasser eine klare Lösung her. Zu dieser Lösung fügt man 0.318 g ZnO und homogenisiert, bis sich das Zinkoxid gelöst hat. Danach fügt man portionsweise insgesamt 26.44 g Tetramethoxysilan Si(OCH₃)₄ hinzu, homogenisiert für weitere 30 Minuten und füllt das Reaktionsgel in einen 50 ml fassenden Autoklaven.

Die Kristallisation erfolgt bei 220°C innerhalb von 14 Tagen. Nach dem Erkalten wird das Produkt abfiltriert, neutralgewaschen und bei 120°C über Nacht getrocknet.

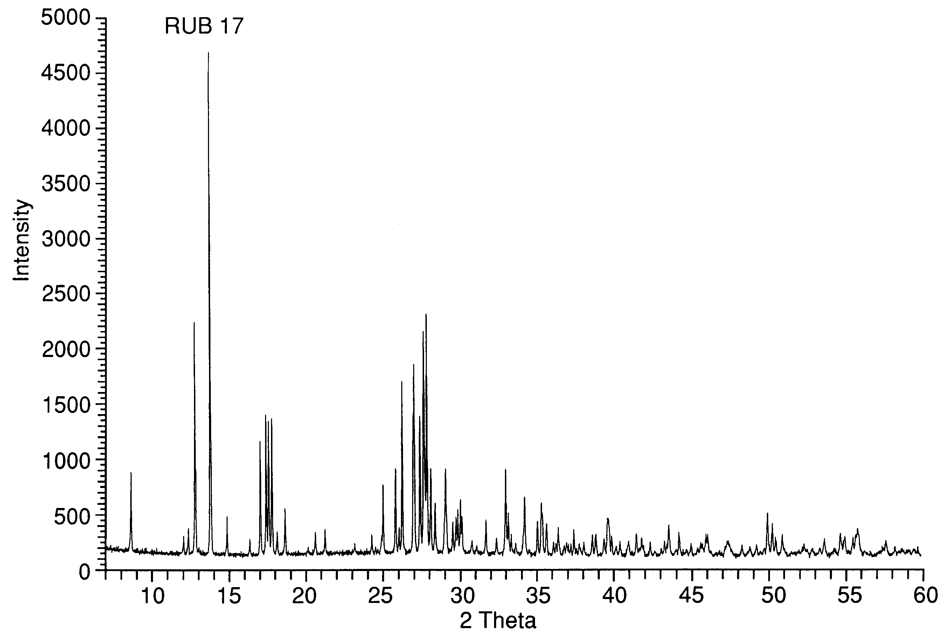

Die chemische Analyse ergibt für das kristalline Material eine molare Zusammensetzung von Na₁₀K₆(Si₂₈Zn₈)*20 H₂O. Das Syntheseprodukt weist das in Abb. 1 gezeigte für RUB-17 typische Röntgendiffraktogramm auf.

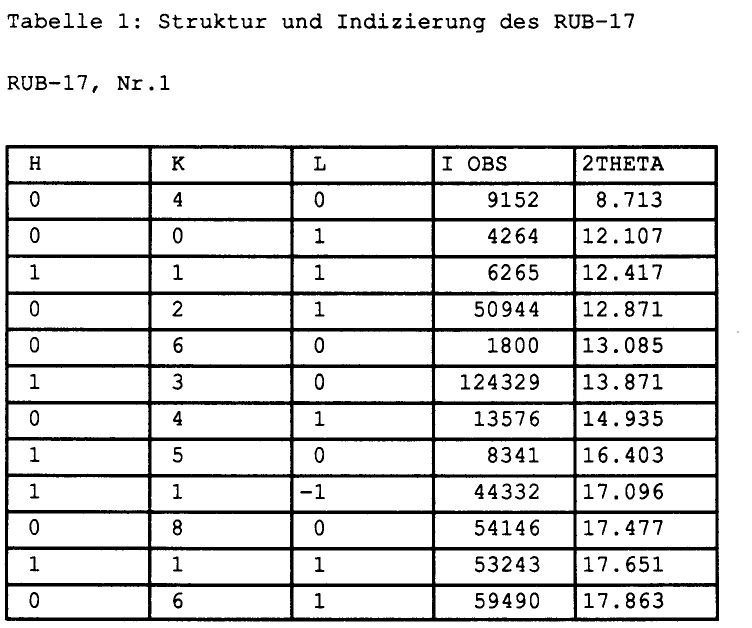

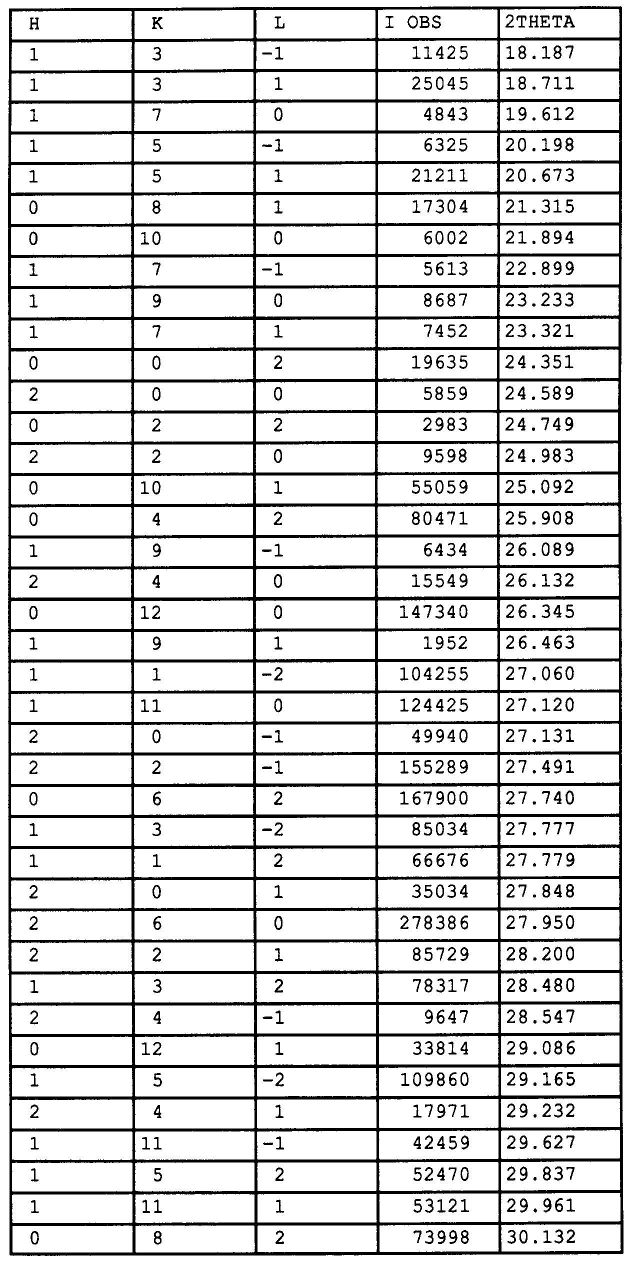

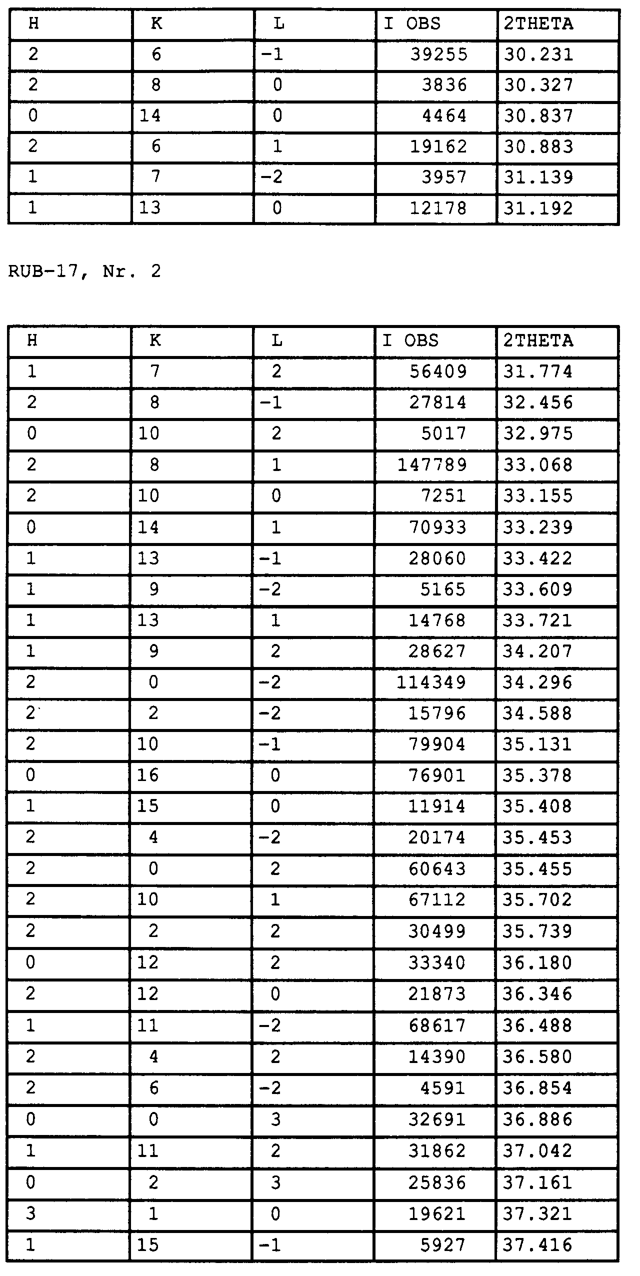

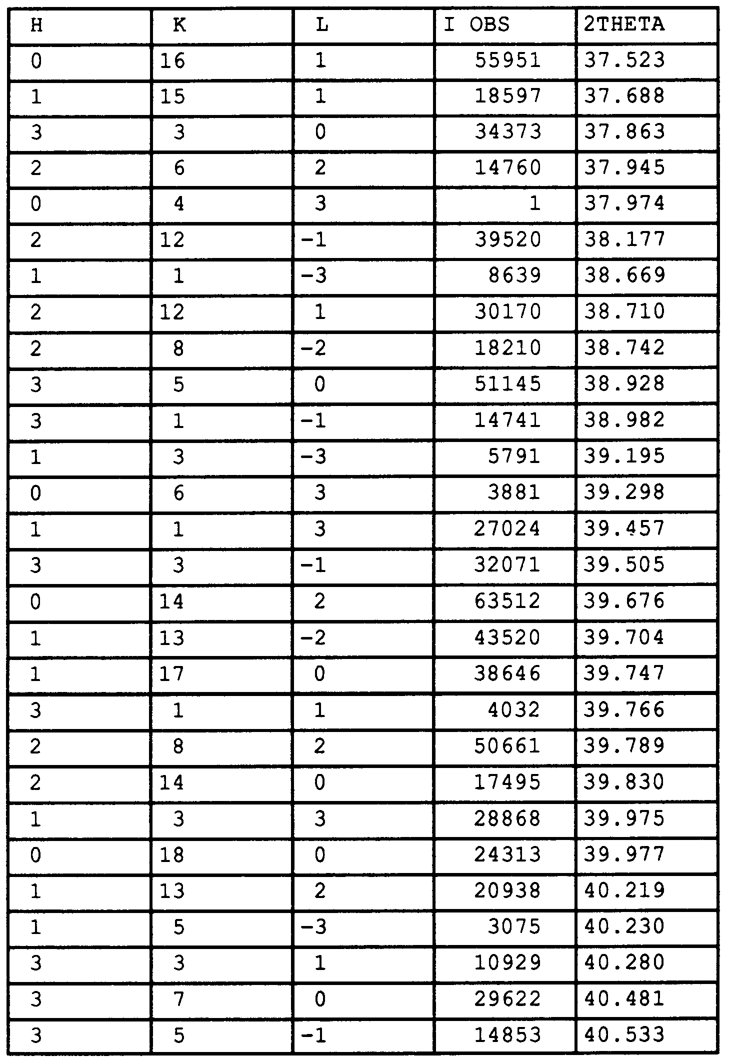

- Abbildung 1:: Röntgenpulverdiffraktogramm Syntheseprodukt Beispiel

## Patentansprüche

1. Kristalline Festkörper von Zinko-, Boro-, Alumo-, Gallo-, Titano-, Vanadosilikaten oder deren Gemische mit RUB-17 Struktur, dadurch gekennzeichnet, daß sie innerhalb einer monoklinen Raumgruppe von C2, Cm oder C2/m vorliegen und ein Röntgenbeugungsmuster aufweisen, in dem mindestens die folgenden Reflexe (hkl) bei den angegebenen Beugungswinkeln auftreten:
| h | k | l | Intensität I/Iₒ | Beugungswinkel 2 Theta |
|---|---|---|---|---|
| 0 | 4 | 0 | schwach | 8.71 |
| 1 | 3 | 0 | stark | 13.87 |
| 0 | 4 | 1 | schwach | 14.93 |
| 1 | 1 | -1 | mittel | 17.09 |
| 0 | 8 | 0 | mittel | 17.47 |
| 1 | 1 | -2 | stark | 27.06 |
| 1 | 11 | 0 | stark | 27.12 |
| 2 | 2 | -1 | stark | 27.49 |
| 0 | 6 | 2 | stark | 27.74 |
| 2 | 6 | 0 | sehr stark | 27.95 |

2. Kristalline Festkörper von Zinkosilikat mit RUB-17 Struktur, dadurch gekennzeichnet, daß das molare Verhältnis von Si/(Si+Zn) Werte von 0,5:1 bis 1:1 beträgt.

3. Kristalline Festkörper von Zinko-, Boro-, Alumo-, Gallo-, Titano-, Vanadosilikaten oder deren Gemische mit RUB-17 Struktur nach Anspruch 1, hergestellt durch hydrothermale Kristallisation von Siliciumdioxid, einer Verbindung A-Oₙ, in der A Zink, Bor, Aluminium, Gallium, Titan oder Vanadium und n die Wertigkeit des Elements A bedeutet, einer Kalium-, Natrium- und Tetraalkylammoniumverbindung der allgemeinen Formel 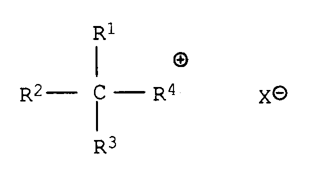 in der R¹, R², R³ und R⁴ C₁- bis C₈-Alkyl und X Hydroxy, Fluor, Chlor oder Brom bedeuten.
Zeichn.

4. Kristalline Festkörper von Zinko-, Boro-, Alumo-, Gallo-, Titano-, Vanadosilikaten oder deren Gemische mit RUB-17 Struktur nach Anspruch 1, hergestellt durch hydrothermale Kristallisation von Siliciumdioxid, einer Verbindung A-Oₙ, in der A Zink, Bor, Aluminium, Gallium, Titan oder Vanadium und n die Wertigkeit des Elements A bedeutet, einer Kalium-, Natrium- und Tetraalkylammoniumverbindung der allgemeinen Formel 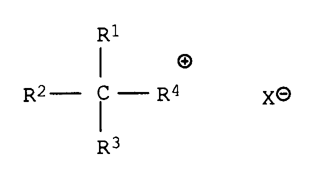 in der R¹, R², R³ und R⁴ gleich sind und C₁- bis C₄-Alkyl und X Hydroxy bedeuten.

5. Kristalline Festkörper von Zinko-, Boro-, Alumo-, Gallo-, Titano-, Vanadosilikaten oder deren Gemische mit RUB-17 Struktur nach Anspruch 1, hergestellt durch hydrothermale Kristallisation eines Synthesegels der molaren Zusammensetzung: 30:1 bis 50:1 SiO₂/AO, 25:1 bis 150:1 H₂O/SiO₂, 0,5:1 bis 0,75:1 OH⁻/SiO₂, 0,04:1 bis 0,07:1 Tetraalkylammoniumverbindung/SiO₂.

6. Kristalline Festkörper von Zinko-, Boro-, Alumo-, Gallo-, Titano-, Vanadosilikaten oder deren Gemische mit RUB-17 Struktur nach Anspruch 1, hergestellt durch hydrothermale Kristallisation von Siliciumdioxid, einer Verbindung A-Oₙ, in der A Zink, Bor, Aluminium, Gallium, Titan oder Vanadium und n die Wertigkeit des Elements A bedeutet, einer Kalium-, Natrium- und Tetraalkylammoniumverbindung, wobei man K zu Si im Molverhältnis von 0,45 : 1 bis 0,15 : 1 einer Kaliumverbindung einsetzt.

7. Verwendung der kristallinen Festkörper von Zinko-, Boro-, Alumo-, Gallo-, Titano-, Vanadosilikaten oder deren Gemische mit RUB-17 Struktur nach Anspruch 1 als Katalysator und/oder Katalysatorträger.

8. Verwendung der kristallinen Festkörper von Zinko-, Boro-, Alumo-, Gallo-, Titano-, Vanadosilikaten oder deren Gemische mit RUB-17 Struktur nach Anspruch 1 als Sorptionsmittel.

9. Verwendung der kristallinen Festkörper von Zinko-, Boro-, Alumo-, Gallo-, Titano-, Vanadosilikaten oder deren Gemische mit RUB-17 Struktur nach Anspruch 1 als Pigment.

10. Verwendung der kristallinen Festkörper von Zinko-, Boro-, Alumo-, Gallo-, Titano-, Vanadosilikaten oder deren Gemische mit RUB-17 Struktur nach Anspruch 1 in elektronischen und/oder optischen Bauteilen.
